# EUROPÄISCHE PATENTANMELDUNG

(11) **EP 4 604 011 A1**
(43) Veröffentlichungstag der Anmeldung: **20.08.2025**
(21) Anmeldenummer: 24157356.7
(22) Anmeldetag: 13.02.2024
(51) Int. Cl.: G06N 3/045, G06N 3/096

(54) **COMPUTERIMPLEMENTIERTES VERFAHREN ZUR VERWENDUNG VON WISSEN AUS EINEM TRAINIERTEN GLOBALEN LARGE LANGUAGE MODEL, COMPUTERPROGRAMMPRODUKT UND VORRICHTUNG**

(71) Anmelder: Siemens Aktiengesellschaft, 80333 München (DE)
(72) Erfinder: Buckley, Mark, 81829 München (DE); Büttner, Florian, 60316 Frankfurt (DE); Köbler, Alexander, 90461 Nürnberg (DE); Thon, Ingo, 85630 Grasbrunn (DE)
(74) Vertreter: Siemens Patent Attorneys

(57) **Zusammenfassung**

Das Sammeln von aufgabenspezifischem Wissen für eine Klassifizierungsaufgabe durch eine Kl im Industriellen Umfeld setzt ein hohes Maß an Fachwissen über den jeweiligen Bereich voraus. Um sie zu formalisieren und in das verwendete Machine Learning-Modell einzubetten braucht man hingegen ML-Experten. Eine enge Zusammenarbeit zwischen Datenwissenschaftlern und Domänenexperten für jede spezifische Anwendung ist Voraussetzung. Dieser Prozess ist sehr kostspielig und fehleranfällig bei falscher Kommunikation, was dazu führt, dass diese Ansätze nur für eine begrenzte Anzahl von Anwendungen praktikabel sind, bei denen der Nutzen der Lösung der Aufgabe mit einem ML-Ansatz mit einem hohen Grad an Domänenwissensintegration ausreichend hoch ist, um diese Kosten zu decken.

Die vorgeschlagene Methode überwindet die oben genannten Hürden, indem sie eine Möglichkeit bietet, Wissen, das in LLMs enthalten ist, in kleinen anwendungsspezifischen Modellen zu verwenden. Dies geschieht durch die Destillation des Expertenwissens, das in LLMs unter Verwendung domänenspezifischer Eingabeaufforderungen in Regeln zur direkten Klassifizierung und/oder zur Extraktion von relevanten Datenmerkmalen zusammengefasst und anschließend während der Inferenz oder des Trainings in kleinen aufgabenspezifischen Modellen verwendet wird.

## Beschreibung

Ein sogenanntes Large Language Model, LLM ist ein Sprachmodell, das sich durch seine Fähigkeit auszeichnet, Sprache für allgemeine Zwecke zu verstehen und zu generieren. LLMs erwerben diese Fähigkeiten durch das Erlernen statistischer Beziehungen aus sehr großen Mengen von Textdokumenten während eines rechenintensiven selbstüberwachten und halbüberwachten Trainingsprozesses. LLMs sind sogenannte neuronale Netze, die einer Transformatorarchitektur folgen.

Als autoregressive Sprachmodelle arbeiten sie, indem sie einen Eingabetext verwenden, und wiederholt das nächste Token oder Wort vorhersagen. Bis 2020 war ein sogenannter "Fine Tuning" Prozeß die einzige Möglichkeit, ein Modell so anzupassen, dass es bestimmte Aufgaben erfüllen konnte. Größere Modelle, können mit Hilfe von sogenanntem Prompt-Engineering ähnliche Ergebnisse erzielen. Man geht davon aus, dass sie sich Wissen über Syntax, Semantik und Ontologie aneignen, dass in menschlichen Sprachkorpora enthalten ist, aber auch Ungenauigkeiten und Verzerrungen, die in den Korpora vorhanden sind.

Bemerkenswerte Beispiele sind die GPT-Modelle von OpenAI (GPT, Generative Pretrained Transformer) z. B. GPT-3.5 und GPT-4, die in ChatGPT verwendet werden), PaLM von Google (verwendet in Bard) und LLaMA von Meta sowie BLOOM, Ernie 3.0 Titan und Claude 2 von Anthropic.

Die jüngsten Entwicklungen bei Large Language Models führen dazu, dass sie nicht nur in der Analyse von natürlicher Sprache verwendet werden, sondern weitere Einsatzbereiche erschlossen werden sollen. Beispielsweise gibt es ein großes Interesse an der Erforschung ihres potenziellen Einsatzes im industriellen Bereich.

Anders als bei der Anwendung auf Sprachverarbeitungsaufgaben für Programmierung oder natürliche Sprachen ist die Nutzung ihres Potenzials für diskriminative Aufgaben mit unterschiedlichen Datenmodalitäten wie Zeitreihen oder Tabellendaten jedoch noch unklar. Ein Beispiel für eine solche Anwendung ist die, im industriellen Umfeld häufig verwendete, Zustandsüberwachung anhand von Zeitreihendaten, die Prozessoptimierung auf Basis von Tabellendaten oder verschiedene Formen der Qualitätssicherung in der Produktion von Waren.

Solche Klassifizierung von Daten wird bislang häufig noch auf Basis von Expertensystemen durchgeführt.

Als hinderliche Faktoren für den Einsatz von LLMs für diese Anwendungen wurden identifiziert:
- Die Größe der Modelle macht den Einsatz dieser Systeme für bestimmte Aufgaben, z. B. auf Edge Geräten, schwierig oder unrealisierbar, aufgrund von Anforderungen an die benötigten Ressourcen (Speicherplatz, Rechenkapazität etc.).
- Darüber hinaus ist das Training und die Anpassung von globalen LLMs für sehr spezifische Aufgaben ineffizient und daher ist ein Abgleich der Schlussfolgerung des Modells mit empirischen Beobachtungen in diesen Fällen nicht möglich.
- Das große Potenzial aktueller Modelle ist nur für sehr spezifische Datenarten wie z. B. Sprache direkt nutzbar. Die Übertragung der Ergebnisse auf andere Modalitäten wie z. B. Sensordaten (in Form von Zeitreihen, Tabellen, Bilddaten, ...) ist noch wenig untersucht.
- Die Verwendung von aufgabenspezifischen Daten, entweder für das Training oder für die Eingabe dieser Modelle, kann darüber hinaus Datenschutzbedenken aufwerfen, entweder auf der Seite des Herstellers oder Anbieters oder auf der Seite der Kunden, wenn das System in ein Produkt integriert ist.
- Bekannt ist inzwischen das Phänomen der Halluzination (alternativ auch Konfabulation genannt) im Bereich der generativen Künstlichen Intelligenz (KI) als Black Box System. Dabei handelt es sich um ein überzeugend formuliertes Resultat einer Kl, das nicht durch Trainingsdaten gerechtfertigt zu sein scheint und objektiv falsch sein kann. Unter Berücksichtigung gesetzlicher und nicht-funktionaler Anforderungen erschwert dieser Effekt ihren Einsatz für autonome Systeme in vielen, insbesondere den Industriellen Anwendungen, drastisch.

Seit der Veröffentlichung sehr leistungsfähiger LLMs gibt es erste Aktivitäten, um diese Systeme für eine Vielzahl von Anwendungsfällen auszuprobieren.

### Beispiel: LLM für "Weak-Supervision"

R. Smith, J. A. Fries, B. Hancock, and S. H. Bach beschreiben in "Language Models in the Loop: Incorporating Prompting into Weak Supervision." die Verwendung von einen LLM in Kombination mit aufgabenspezifischen Eingabeaufforderungen, um nicht-gelabelte Eingabeproben für eine Zielanwendung zu klassifizieren. Die Ergebnisse dienen als schwache Labels, die in einem probabilistischen Modell kombiniert werden. Das folgt beispielsweise dem von A. Ratner, C. De Sa, S. Wu, D. Selsam, and C. Ré, "Data Programming: Creating Large Training Sets, Quickly." arXiv, Jan. 08, 2017 eingeführte Paradigma des programmatischen Labelns von Daten und in Produkten von "Snorkel" https://snorkel.ai/ verwendet wird. Diese schwachen Labels werden dann verwendet, um ein kleineres Zielsprachenmodell (LM) zu trainieren.

R. Zhang, Y. Yu, P. Shetty, L. Song, and C. Zhang, formulieren in "PRBoost: Prompt-Based Rule Discovery and Boosting for Interactive Weakly-Supervised Learning." arXiv, Mar. 18, 2022 Regeltemplates (Schablonen), anstatt direkt Prompts zu verwenden, um schwache Bezeichnungen für bestimmte Fälle zu generieren. Die Vorlagen in Kombinationen mit bestimmten Dateninstanzen werden verwendet, um ein LM abzufragen, um Labeling-Funktionen für Textdaten zu generieren, die über einzelne Instanzen hinaus generalisieren. Die Autoren verwenden dabei einen sogenannten Bootstrapping-Ansatz, um neue Regeln für Beispiele mit hohen Fehlern des LM zu finden.

Beide oben aufgeführten Ansätze geben Dateninstanzen der Zielanwendung direkt in das vortrainierte LM ein. Dies führt zu der Anforderung, dass die Eingabedaten für die Zielanwendung aus Text bestehen müssen, was die Anwendung dieser Ansätze auf die in der Einleitung genannten anderen Anwendungsfälle wie Zahlenreihen verhindert.

Das Einbeziehen von Wissen über schwache Labels reduziert den Labeling-Aufwand für die Zielaufgabe, jedoch bringt das Trainieren eines Modells auf einem schwachen Überwachungssignal keinen oder nur einen geringen Nutzen in Bezug auf seine Interpretierbarkeit. Darüber hinaus könnte das Einbeziehen schwacher Labels, die entweder durch Labeling-Funktionen oder direkt durch das LM generiert werden, den Datenbedarf des Zielmodells erhöhen, was in industriellen Anwendungen mit Low-Data-Regime, sehr nachteilig sein kann.

### Wissensintegration in Trainingsziel und Inferenz

Um ML-Modelle besser interpretierbar zu machen und möglicherweise den Datenbedarf während des Trainings zu reduzieren, kann Expertenwissen direkt in die Vorverarbeitung der Daten, genauer der Merkmalextraktion, oder auch der Architektur oder das Lernziel des Modells einfließen.

Weiterhin existieren konkrete Ansätze für die Einbeziehung von Domänenwissen in das Lernziel, wie das sogenannte Physics-Informed ML, bei dem Differentialgleichungen im Lernziel verwendet werden, oder die Neuro-Symbolische KI, die aufgabenspezifische logische Regeln verwendet. Allgemeiner ausgedrückt wird das Domänenwissen als zusätzliche Einschränkung in das Lernziel eingeführt, was zu einer Synchronisierung zwischen der Argumentation des Modells und dem verfügbaren Domänenwissen führt, wodurch dessen Wissenskonformität und damit die Interpretierbarkeit der generierten Ergebnisse erhöht wird. M. F. Pradier, J. Zazo, S. Parbhoo, R. H. Perlis, M. Zazzi, and F. Doshi-Velez, verwenden in "Preferential Mixture-of-Experts: Interpretable Models that Rely on Human Expertise as much as Possible." menschen-basierte Regeln direkt während der Inferenzphase, indem sie diese in die Modellarchitektur einbeziehen.

Das Sammeln von aufgabenspezifischem Wissen, das für diese Ansätze erforderlich ist, setzt oft ein hohes Maß an Fachwissen über den jeweiligen Bereich voraus. Um sie zu formalisieren und in das verwendete Machine Learning-Modell einzubetten braucht man hingegen ML-Experten. Die oben genannten Punkte setzen eine enge Zusammenarbeit zwischen Datenwissenschaftlern und Domänenexperten für jede spezifische Anwendung voraus. Dieser Prozess ist sehr kostspielig und fehleranfällig bei falscher Kommunikation, was dazu führt, dass diese Ansätze nur für eine begrenzte Anzahl von Anwendungen praktikabel sind, bei denen der Nutzen der Lösung der Aufgabe mit einem ML-Ansatz mit einem hohen Grad an Domänenwissensintegration ausreichend hoch ist, um diese Kosten zu decken.

Es ist Aufgabe der Erfindung, eine Lösung anzubieten, welche die Verwendung von Large Language Model auch bei spezifischen Anwendungen im Industriellen Umfeld ermöglicht. Dabei soll es den Domänenexperten ermöglicht werden, diese zu verwenden auch ohne über tiefergehendes Wissen über die Funktionsweise des ML Modells zu verfügen.

Diese Aufgabe wird gelöst durch ein computerimplementiertes Verfahren gemäß den Merkmalen des Patentanspruchs 1.

Weiterhin wird diese Aufgabe gelöst durch ein Computerprogrammprodukt gemäß Patentanspruch 10 und eine Vorrichtung gemäß Patentanspruch 11.

Die Aufgabe wird gelöst durch in Verfahren zur Verwendung von Wissen aus einem trainierten Globalen Large Language Model für eine Zieldomäne in der Industriellen Anwendung auf Basis von Industriellen Prozessen und daraus entnommenen Meßwerten zur Lösung von Prädiktionsaufgaben mit den folgenden Schritten:
- Anwenden von zieldomänenspezifischen Prompts auf das Globale Large Language Model, und
- Extrahieren von zieldomänenspezifischem Wissen aus dem globalen LLM in Form von Regeln zur Merkmalsextraktion aus Eingabedaten für eine zieldomänenspezifische template Modelarchitektur,
- Integration der extrahierten Regeln in eine zieldomänenspezifische template Modelarchitektur,
- Training der zieldomänenspezifischen template Modelarchitektur auf anwendungsspezifschen Daten, und
- Erzeugen eines kleinen anwendungsspezifischen ML System zum Einsatz in der Zieldomäne.

Vorteilhafte Ausgestaltungen der Erfindung sind in den Unteransprüchen angegeben.

Zusätzlich zu den extrahierten Regeln zur Merkmalsextration können in einer Ausgestaltung der Erfindung weiterhin Klassifizierungsregeln generiert werden für Eingabedaten für das anwendungsspezifisches ML- System durch das Globale Large Language Model, zur Durchführung einer Klassifizierungsaufgabe in der domänenspezifischen industriellen Anwendung.

Diese Klassifizierungsregeln sorgen dafür, dass das Ergebnis der für das System zu lösenden Aufgabe, also beispielsweise der Prädiktionsaufgabe in der Industriellen Anlage, genauer ausfallen wird.

Unter einer Prädiktionsaufgabe kann man sich beispielsweise Verschleißermittlungen in Bearbeitungswerkzeugen vorstellen.

Die so generierten Klassifizierungsregeln werden dann in das anwendungsspezifisches ML-System integriert und in ein Zielmodell trainiert.

In einer weiteren Ausgestaltungsform erfolgt das Integrieren von so generierten Klassifizierungsregeln in das anwendungsspezifische ML-System mithilfe eines Leitmodells,
wobei das Leitmodell eine Zuweisung von Eingabedaten zu einem ML-basierten Klassifizierungsmodell oder einer der Klassifizierungsregel durchführt.

Mit dieser Ausgestaltungsform wird alternativ entschieden, ob eine Eingabe durch das vortrainierte ML-basierten Klassifizierungsmodell oder durch eine Regel bearbeitet wird. Regeln haben den Vorteil, dass sie weniger Computing Power benötigen und im Vergleich zu dem ML-basierten Klassifizierungsmodell auch keine "Black Box" darstellen, das Ergebnis also nachvollziehbar ist.

Eine Rückmeldung in Form eines Feedbacks durch ein domain-spezifisch trainiertes ML-System liefert Informationen über die Anwendung der Regel und die Korrektheit der Ergebnisse bei Anwendung der generierten Regeln zur Merkmalsextraktion oder direkten Klassifizierung auf die Eingabedaten zurück. Diese können verwendet werden zum Verfeinern der Prompts, die dann wiederum zum Generieren von Regeln zur Extraktion von Merkmalen oder direkten Klassifizierung benötigt werden.

Auch das Feedback sorgt am Ende für eine Verbesserung des Endergebnisses bzw. die Korrektheit der Ergebnisse zur Prädiktionsaufgabe.

Wenn der generierte Programm-Code zu den Regeln gleich in eine vorgegebene Form gebracht wird (also "Formalisiert" wird), dann ist es vorteilhaft, wenn er zumindest eine Schnittstelle aufweist zur direkten Integration in das modulares anwendungsspezifische ML-System. Dies sollte durch die Formulierung des korrekten Prompts möglich sein, es erspart dann im Weiteren insbesondere zusätzlichen Integrations-Aufwand und Test-Aufwand.

Die Klassifizierungsaufgabe des Verfahrens kann eine Zustandsüberwachung eines Geräts in der Industriellen Anlage (400) sein, anhand von entnommenen Meßwerten zu dem Gerät, beispielsweise durch einen Sensor. Alternativ wäre es auch möglich, alle möglichen Betriebsdaten durch die Steuerung des Gerätes zu erfassen und auszuwerten. Dieses Vorgehen, auch Predictive Maintenance genannt, führt zu insgesamt geringeren Wartungskosten und höheren Verfügbarkeiten in der Anlage, da eine Wartung nicht zu früh durchgeführt wird. Anwendungsbeispiele könnten sein (die Aufzählung ist nicht abschließend):
- Störungen erkennen
- Störungen verorten
- Störungsursachen erkennen,
- Durchsatzschwankungen erkennen
- Wartungen und Reparaturen disponieren.

Eine weitere Ausführungsform bietet eine domainspezifische Prompt-Bibliothek an, in der eine Menge von domainspezifischen Prompts zur Auswahl angeboten werden. Diese kann beispielsweise anhand einer Anwendungsbeschreibung durchgeführt werden.

Die vorgeschlagene Methode überwindet die oben genannten Hürden, indem sie eine Möglichkeit bietet, Wissen, das in LLMs enthalten ist, in kleinen anwendungsspezifischen Modellen zu verwenden. Dies geschieht durch die Destillation des Expertenwissens, das in LLMs unter Verwendung domänenspezifischer Eingabeaufforderungen in Regeln zur direkten Klassifizierung und/oder zur Extraktion von relevanten Datenmerkmalen zusammengefasst und anschließend während der Inferenz oder des Trainings in kleinen aufgabenspezifischen Modellen verwendet wird.

Zusammenfassend lässt sich sagen, dass die Interpretierbarkeit von aufgabenspezifischen Modellen erhöht und der Daten- und Labelbedarf reduziert wird, indem das für die Lösung der Aufgabe wertvolle Wissen aus einem vortrainierten, sehr allgemeinen LLMs extrahiert wird.

Dabei kann das Potenzial der LLMs auch in kleinen Modellen genutzt werden, die den Vorteil haben, bezüglich der benötigten "Computing Power" (Rechenkapazität, Speicherplatz) deutlich reduzierte Anforderungen aufzuweisen und daher auch auf beschränkten Rechnerressourcen (wie den im industriellen Umfeld gängigen Edge Geräten) zum Einsatz kommen können.

Mit der beschriebenen Lösung, die universelle LLMs in diesen Prozess einbezieht, wird der Zeitaufwand für Domänenexperten sowie Datenwissenschaftler für die Wissensintegration reduziert und damit der Aufwand für die Verwendung von Ansätzen des maschinellen Lernens für die beschriebenen Anwendungen verringert.

Es wird ein System vorgeschlagen, das aus LLMs extrahiertes Wissen unabhängig von der Datenmodalität der Aufgabe in ein kleineres Zielmodell einbezieht.

Bevorzugte Ausführungsformen der Erfindung werden im Weiteren durch die Figuren dargestellt. Dabei zeigt
- Figur 1: eine High-Level-Systemarchitektur
- Figur 2: eine beispielhafte Realisierung für eine industrielle Anlage.

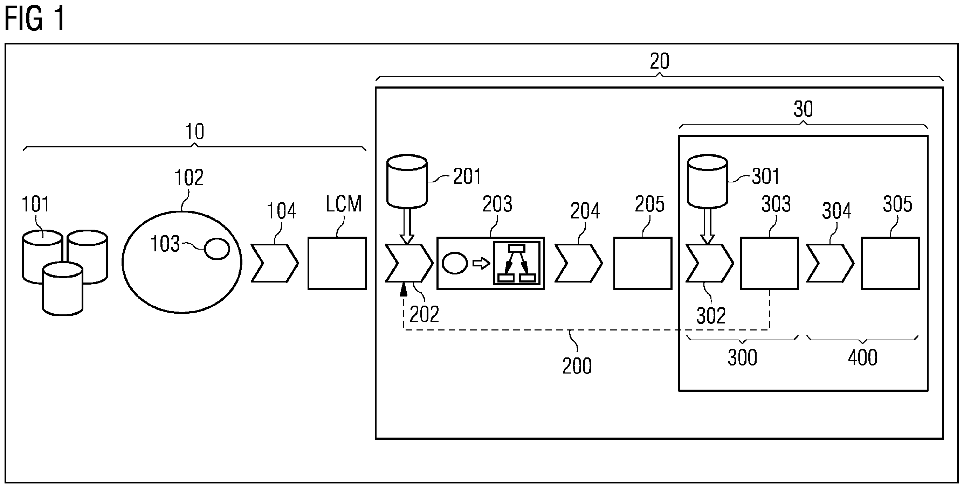

Die in Figur 1 gezeigte Vorgehensweise beschreibt den betrachteten Informationsfluss. Dieser ist im Wesentlichen in drei Abschnitte eingeteilt,
- ein Anwendungsspezifischer Teil, 30
- ein Domänen- oder Aufgabenspezifischer Teil, 20 und
- ein domänenunabhängiger Teil 10 (ggf. plus 20)

Im Weiteren wird die folgende Unterscheidung verwendet:
Aufgaben- oder Domänenspezifisch 20 sind die Schritte die generell für eine bestimmte zu lösende Aufgabe gleichbleiben, z. B. das Extrahieren von Regeln für die Erkennung von Lagerschäden auf Basis von Vibrationsdaten.

Anwendungsspezifisch, 30, ist das Training des Modells auf Daten die von einer speziellen Anlage/Machine/Asset kommen und damit das anwendungsspezifische Modell, das für diese spezielle Anwendung optimiert ist.

Verwendet wird ein universelles Large Language Model LLM, das mit einer sehr großen Datenmenge 101 trainiert wird, 104 umfassend Daten einer Vielzahl verschiedener Domänen 102, sowie hoffentlich auch der gewünschten Domäne 103, beispielsweise (wissenschaftliche) Publikationen, für die Klassifizierungsaufgabe eine Zustandsüberwachung eines bestimmten Bauteils, beispielsweise von Lagern. Dabei kann es sich zum Beispiel um ein Allzweckmodell wie ChatGPT handeln oder auch ein LLM, das für industrielle Anwendungen optimiert ist. Es wird jedoch davon ausgegangen, dass das LLM innerhalb des domänenübergreifenden Wissens während des Trainings mit dem Gesamtdatenbestand auch Erkenntnisse über die Zieldomäne gewonnen hat. Das trainierte domänenspezifische Wissen kann dabei auf domänenspezifischer Literatur wie wissenschaftlichen Publikationen, Diskussionen in einem Fachforum, Handbücher oder anderer Literatur basieren oder darauf zurückgreifen, die mit dem Ziel- oder Anwendungsgebiet in Verbindung steht.

Um das zieldomänenspezifische Wissen aus dem LLM zu extrahieren, werden dann in einem zweiten, domänenspezifischen Teil des Verfahrens ziel- bzw. anwendungsdomänenspezifische Eingabeaufforderungen 201 (sogenannte "Prompts", also kurze Texte oder Anweisungen, die eingegeben werden können, um bestimmte Antworten oder Aktionen auszulösen) verwendet. Die Prompts sind als Aufgabenstellung formuliert, um das benötigte zieldomänenspezifische Wissen in Form von Regeln abzufragen 202.

Es kann auch eine Formalisierung der Prompts durchgeführt werden, zur Lösung von Prädiktionsaufgaben (konkreter: Klassifizierungsaufgaben) auf Basis von Industriellen Daten (Beispiel: Sensordaten).

Aufgrund der Codegenerierungsfähigkeiten des LLMs werden die Eingabeaufforderungen so formalisiert, dass die resultierenden Zieldomänenregeln 203 direkt in Softwarefunktionen münden, die durch eine vordefinierte einheitliche Schnittstelle direkt in ein als Softwaremodul modular definierte zieldomänenspezifische template Modelarchitektur 205 integriert werden können, Schritt 204. Die Modellvorlage bietet die Möglichkeit das extrahierte Wissen in Training oder Inferenz des Modells zu integrieren. Eine mögliche Realisierung der Integration stellt 300 dar.

In dem Anwendungsspezifischen Abschnitt 30 wird das Modell dann mit anwendungsspezifisch gekennzeichneten Daten trainiert. Dabei wird das aus dem LLM gewonnene Wissen mittels anwendungsspezifischer Trainingsdaten mit empirischen Beobachtungen verknüpft, die die Aufgabenstellung beschreiben. Dies sind z. B. gesammelte Vibrationsmessungen, die einen guten und schlechten Zustand einer zu überwachenden Maschine beschreiben. Durch das Trainieren der Modellvorlage, welche das extrahierte LLM-Wissen enthält, werden diese beiden Informationsquellen verknüpft und implizit miteinander abgeglichen.

Die Methode der Wissensintegration muss dabei das Rauschen, z. B. verursacht durch Halluzinationen des LLM, und die Unvollständigkeit des extrahierten Wissens berücksichtigen. Dies ist der Fall bei der Integration der Regeln als Einschränkungen (Constraints) als zusätzlicher Fehlerterm in das Lernziel des Modells, oder auch bei der direkten Integration des Wissens als Klassifikationsregeln in die Architektur des Modells.

Ein Beispiel für Constraints, die in ML-Modelle integriert werden können, sind physikalische Regeln, beispielsweise soll in einem geschlossenen System der vorhergesagte Druck steigen, sobald die Eingangsgröße der Temperatur steigt. Solche einfachen Zusammenhänge zwischen Ausgangs- und Eingangsgrößen können als Einschränkungen zusätzlich zur Erfüllung der Zielsetzung während des Trainings dem Modell auferlegt werden.

Nach dem Trainingsschritt 302 kann das resultierende kleine anwendungsspezifische ML-Modell in der engen Zielanwendung eingesetzt werden, 304 z. B. auf einem Edge-Gerät in einer industriellen Anlage.

Die in Figur 1 dargestellte hierarchische Struktur verdeutlicht die Wiederverwendbarkeit der einzelnen Komponenten. Während das globale LLM, das nur einmal in Schritt 10 trainiert werden muss, und danach in verschiedenen Anwendungsdomänen verwendet werden kann, jeweils Schritt 20, werden die erstellten Vorlagenmodelle durch die verwendeten Prompts für einen bestimmten Anwendungstyp angegeben. Dadurch können die Vorlagenmodelle z. B. auf verschiedene Maschinen oder Umgebungsbedingungen übertragen werden. Nach dem Trainingsschritt mit anwendungsspezifischen / maschinenspezifischen Daten wird das Modell an eine bestimmte Anwendung angepasst. Beispielsweise soll ein vorbestimmtes Motorenmodell überwacht werden, das ein Lager enthält. Die Klassifizierung von Lagerfehlern der Lager, die in diesem bestimmten Motorenmodell verbaut sind (wie in dem Beispiel erwähnt), ist dann ein anwendungs- bzw. zielspezifisches Trainingsziel.

In dem Ausführungsbeispiel, welches in der Figur 1 dargestellt ist, wird eine Feedback-Schleife zwischen dem generierten Modell 303 und dem Abfragen des LLMs 202 eingeführt. Das Feedback kann dabei z. B. Informationen bezüglich der Qualität der generierten Regel in Bezug auf die Trainingsdaten oder zusätzliche prototypische Datenpunkte umfassen, wo die Regel zutrifft/genutzt wird oder auch nicht zutrifft/nicht genutzt wird. Hierdurch wird ein Überarbeiten der Regeln auf Basis von empirischen Beobachtungen / anwendungsspezifischen Trainingsdaten ermöglicht. Durch die Rückkopplung von Erkenntnissen aus einer größeren Anzahl an verschiedenen Anwendungen kann eine generelle Anwendbarkeit der angepassten Regeln gewährleistet und eine Überanpassung auf eine bestimmte Anwendung verhindert werden.

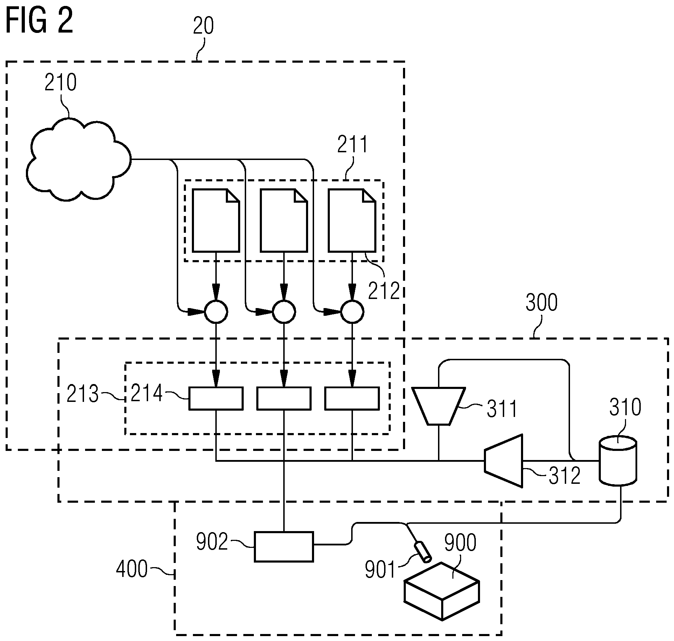

Figur 2 zeigt eine mögliche Ausführungsform der vorgeschlagenen Erfindung, bei der das aus dem LLM extrahierte Wissen in ein Zielmodell integriert wird, als Klassifikationsregeln, die während der Inferenz (also der Laufzeit) ausgewertet werden. Zum Erstellen des Anwendungsmodells wird in diesem Ausführungsbeispiel das LLM in der Cloud bereitgestellt 210 und bietet eine Schnittstelle zum Abfragen von Ausgaben. Darüber hinaus gibt es eine anwendungsspezifische Prompt-Bibliothek, 211 die aus Prompts 212 besteht, um Regeln zur Lösung der Zielaufgabe zu liefern. Unterschiedliche Eingabeaufforderungen konzentrieren sich dabei auf die Generierung von Regeln, die auf unterschiedlichen Attributen der Eingabedaten basieren.

Die Prompts, die in der Prompt-Bibliothek 211 enthalten sind, können aus früheren ähnlichen Anwendungen stammen oder manuell von Domänenexperten für die aktuelle Aufgabe generiert werden. Die Prompts in Kombination mit dem LLM ergeben Klassifizierungsregeln 214, die parallel zu einem kleinen ML-basierten Klassifikationsmodell 311 bereitgestellt werden. Ein zusätzliches, ML-basierten Leitmodell 312 weist Dateninstanzen entweder einer der Regeln 214 oder dem ML-basierten Klassifikationsmodell 311 zu. Anhand eines Satzes von gelabelten Trainingsdaten wird das gesamte System trainiert, um die Zielklassifizierungsaufgabe zu optimieren. Dabei trägt die Anleitung in Kombination mit dem ML-basierten Klassifikationsmodell der Unvollständigkeit und Verrauschtheit der extrahierten Regeln Rechnung. Auf der anderen Seite verallgemeinern die in der Inferenz enthaltenen Regeln über die Trainingsgebiete hinaus und können so den Datenbedarf reduzieren, um ein robustes Modell zu erhalten.

Das anwendungsspezifische trainierte System 902, bestehend aus den Regeln, dem ML-basierten Klassifikationsmodell 311 und dem ML-basierten Leitmodell 312, kann dann in der industriellen Anlage direkt ("On Premise") eingesetzt werden 400, um die Aufgabe, beispielsweise die Zustandsüberwachung eines Industriellen Prozesses 900 durch einen Sensor 901, direkt in der Werkhalle durchzuführen. Für Instanzen, die von den Regeln abgedeckt sind, erhöht die beschriebene Architektur die Interpretierbarkeit der Ergebnisse, indem sie die entsprechende Klassifikationsregel darstellt.

Ein konkretes Beispiel für den in Abbildung 2 überwachten industriellen Prozess könnte ein laufender Motor sein, wie er in einer Werkzeugmaschine oder in einem Förderband verwendet wird, bei dem ein Schwingungssensor am Motor-Gehäuse montiert ist. Die Zielaufgabe ist die Klassifizierung des Zustands der im Motor verbauten Lager.

Die Lagerfehlererkennung anhand von Schwingungsdaten wird sowohl in der wissenschaftlichen Literatur als auch in industriellen Publikationen diskutiert, z. B. in Datenblättern und Whitepapers von Lagerherstellern, oder auch in verschiedenen wissenschaftlichen Veröffentlichungen. Entsprechende Daten und Informationen sind also mit großer Wahrscheinlichkeit auch in einem globalen LLM eintrainiert. Aus diesem Grund kodiert ein LLM, der auf einem riesigen Auszug der im Internet verfügbaren Dokumente geschult wurde, auch domänenspezifisches Wissen über die Erkennung von Lagerfehlern. Die am häufigsten berücksichtigten Regeln zur Klassifizierung von Lagerfehlern basieren auf Merkmalen welche charakteristischen Frequenzen innerhalb des Spektrums des Schwingungssignals abbilden. Diese Frequenzen können wiederum durch die Geometrie des verwendeten Lagers bestimmt werden.

In einem weiteren Ausführungsbeispiel könnten auch ausschließlich die Merkmale welche über Regeln, generiert von LLMs, extrahiert werden genutzt werden In dem oben ausgeführten Ausführungsbeispiel zur Überprüfung von Schäden an einem Lager passiert das Extrahieren der Merkmale implizit innerhalb der Klassifizierungsregeln, z.B. wie beschrieben über die Geometrie des verwendeten Lagers.

Ein konkretes Beispiel für eine Regel, die von einem LLM für die oben beschriebene Anwendung der Überwachung eines Motoren-Lagers generiert wird, könnte wie folgt aussehen:
Prompt:
"Schreibe eine binäre Regel für die Klassifizierung von Lagerschäden im Hüllkurvenspektrum basierend auf der bereitgestellten Fehlerhäufigkeit.
Ausgang: 1 = beschädigt, 0 = nicht beschädigt;
Schnittstelle: fault_classification_1(vibrational_signal, sampling_frequency, fault_frequency, rotational_speed);
Lege einen vernünftigen Schwellenwert fest, der auf den Signaleigenschaften basiert."

**Es folgt ein beispielhafter Programmcode für die Klassifizierung von Lagerfehlern:**

```
 def fault_classification_1 (vibrational_signal, sampling_frequency,
 fault_frequency, rotational_speed):
 #compute the envelope of the signal using the Hilbert transform
 analytic_signal = Hilbert (vibrational_signal)
 envelope = np.abs (analytic_signal)
  
 #compute the spectral content of the envelope using a Fast Fourier
 Transform (FFT)
 n_samples = len (vibrational_signal)
 frequencies = np.fft.rfftfreq (n_samples, d-1/sampling_frequency)
 envelope_spectrum = np.fft.rfft (envelope)
  
 #find the index of the frequency closest to the fault frequency
 idx_fault_frequency = np.argmin (np.abs (frequencies - fault_fre-
 quency))
  
 #find the index of the frequency closest to the 1x rotational speed
 frequency
 freq_rota[tional_speed = rotational_speed / 60
 idx_rotational_speed = np.argmin (np.abs (frequencies - freq_rota-
 tional_speed))
  
 #compute the ration between the spectral content at the fault fre-
 quency and the spectral content at the 1x rotational speed frequency
 ratio = envelope_spectrum [idx_fault_frequency] / envelope_spectrum
 [idx_rotational_speed]
 #set a threshold for the ration based on signal characteristics (e. g.
 signal to noise ratio, amplitude)
 threshold = 0.5
  
 #return 1 if the ratio is above the threshold, otherwise return 0
 if ratio > threshold:
 return 1
 else:
 return 0
```

Diese Regeln entsprechen im Prinzip denen in einem Expertensystem.

Wenn diese Regel durch das Führungsmodell 312 gewählt wird und sie eine "1" und damit eine Indikation für ein beschädigtes Lager ausgibt, wird das in der Regel kodierte Expertenwissen, das in diesem Fall durch die Wahl der Amplitude der charakteristischen Frequenz im Frequenzbereich gegeben ist, als anwendbar angesehen und das Verfahren ergreift die entsprechende hinterlegte Maßnahme: beispielsweise das Senden einer Warnung, welche zu einer Wartung oder sogar dem Abschalten der Anlage führt, oder das Aktualisieren einer Systemstatusdatenbank.

Die aus den Trainingsdaten abgeleiteten Erkenntnisse berücksichtigen die Fälle, in denen die generierten Regeln 213 nicht anwendbar sind, indem sie sich direkt auf das ML-basierten Klassifikationsmodell 311 verlassen, wenn die Regeln in die Modellarchitektur integriert sind, wie in Abbildung 2 gezeigt, oder durch den Verlust, wenn die Regeln in das Lernziel eines dedizierten ML-Modells integriert sind.

Aufgrund der guten Codegenerierungsfähigkeiten aktueller LLMs (und der zu erwartenden weiteren Verbesserungen in zukünftigen Versionen, auch durch die Hinzufügung weiteren Wissens durch Training) kann eine gemeinsame Schnittstelle für die Regeln in den Eingabeaufforderungen definiert werden, die es dadurch dem Nutzer ermöglicht, neue Regeln ohne konkrete ML Programmierkenntnisse einzubinden.

Mit weiteren Fortschritten im Bereich der LLMs und deren gezielter Anpassung an industrielle Anwendungsfälle ist davon auszugehen, dass in Zukunft immer komplexere und zuverlässigere Regeln generiert und angewendet werden können.

Durch das oben beschriebene Verfahren ist es möglich, das hohe Potenzial von LLMs in Anwendungen zu nutzen, in denen sie derzeit noch nicht verwendet werden, insbesondere in der industriellen Anwendung mit ihren erhöhten Anforderungen.

Unseres Wissens gibt es derzeit keine Systeme, die versuchen, das in LLMs enthaltene Wissen für diskriminative Aufgaben zu Datenmodalitäten jenseits von Sprache und Bildern in kleinen anwendungsspezifischen Modellen anwendbar zu machen. Dies birgt ein enormes Potenzial für eine Vielzahl von Anwendungsfällen beispielsweise in dem industriellen Umfeld, wie beschrieben. Die Destillation des Wissens in kleine, anwendungsspezifische ML Systeme ermöglicht es, ein bestehendes, gut etabliertes Softwareframework in Bezug auf den Einsatz zu nutzen, wie z. B. eine Industrial Edge-Infrastruktur. Die Möglichkeit, die aus dem LLM abgeleiteten Regeln mit empirischen Beobachtungen in Einklang zu bringen und damit explizit Rauschen und Unvollständigkeit zu berücksichtigen, bietet eine Möglichkeit, mit der Tendenz von LLMs, falsche Fakten zu halluzinieren, mit hoher Sicherheit umzugehen. In Anbetracht dessen könnte einer der Haupthindernisse für den Einsatz von LLMs im industriellen Bereich angegangen werden.

### Bezugszeichenliste

- LLM: Globales Large Language Model
- 10: Zieldomänen-unabhängiger Schritt
- 101: Aufgabenunabhängige Menge von Text Datensätzen
- 102: Domänenübergreifendes Wissen
- 103: Zieldomänenbezogenes Wissen
- 104: Training
- 20: Domänenspezifischer Schritt.
- 200: Feedback
- 201: Aufgabenspezifischer Prompt
- 202: Query Regeln
- 203: Ziel-Domänen Regeln für Merkmalextraktion und Klassifikation
- 204: Integrations-Schritt
- 205: ML System
- 210: LLM in Cloud
- 211: Aufgabenspezifische Prompt-Bibliothek
- 212: Prompt
- 213: Extrahierte Aufgabenspezifische Regel-Bibliothek
- 214: Extrahierte Aufgabenspezifische Regel
- 30: Anwendungsspezifischer Schritt
- 300: Modell Training
- 301: Anwendungsspezifische Daten
- 302: zieldomänenspezifisches Modell (Architektur)
- 303: anwendungsspezifisches Modell-System
- 304: Bereitstellung
- 305: Bereitgestelltes Lösungsmodell
- 310: Trainingsdaten
- 311: Anwendungsspezifisches ML System
- 312: Leitmodell
- 400: Bereitstellung des Modells
- 900: industrieller Prozess
- 901: Sensor
- 902: Anwendungsspezifisches Modell vor Ort

## Patentansprüche

1. Computerimplementiertes Verfahren (20) zur Verwendung von Wissen aus einem trainierten Globalen Large Language Model (LLM, 210) für eine Zieldomäne in der Industriellen Anwendung auf Basis von Industriellen Prozessen und daraus entnommenen Meßwerten zur Lösung von Prädiktionsaufgaben mit den folgenden Schritten:
- Anwenden von anwendungsdomänenspezifischen Prompts (201, 212) auf das Globale Large Language Model (LLM, 210), und
- Extrahieren von zieldomänenspezifischem Wissen (202) aus dem globalen LLM in Form von Regeln zur Merkmalsextraktion (203) aus Eingabedaten für eine zieldomänenspezifischem template Modelarchitektur (205)
- Integration der extrahierten Regeln in eine zieldomänenspezifischem template Modelarchitektur (205),
- Training (302) der zieldomänenspezifischen template Modelarchitektur (204) auf anwendungsspezifischen Daten, und
- Erzeugen eines kleinen anwendungsspezifischen ML System (303) zum Einsatz (902) in der Zieldomäne (400).

2. Computerimplementiertes Verfahren gemäß Patentanspruch 1,
**dadurch gekennzeichnet, dass**
zusätzlich zu den extrahierten Regeln zur Merkmalsextration (203) Klassifizierungsregeln generiert werden für Eingabedaten für das anwendungsspezifisches ML- System (213, 214) durch das Globale Large Language Model (LLM, 210), zur Durchführung einer Klassifizierungsaufgabe in der domänenspezifischen industriellen Anwendung.

3. Computerimplementiertes Verfahren gemäß Patentanspruch 2,
**dadurch gekennzeichnet, dass**
die Klassifizierungsregeln (213, 214) in das zieldomänenspezifischem template Modelarchitektur (205) integriert und während des Trainings eines anwendungsspezifischen ML System (303) berücksichtigt werden.

4. Computerimplementiertes Verfahren gemäß Patentanspruch 3,
**dadurch gekennzeichnet, dass**
das Integrieren von Klassifizierungsregeln (213, 214) in das anwendungsspezifische ML-System (303) mithilfe eines Leitmodells (312) erfolgt,
wobei das Leitmodell eine Zuweisung von Eingabedaten zu dem ML-basierten Klassifizierungsmodell (311) oder einer Klassifizierungsregel (214) durchführt.

5. Computerimplementiertes Verfahren gemäß Patentanspruch 4,
**dadurch gekennzeichnet, dass**
ein Feedback (200) einem domain-spezifisch trainierten ML-System (303) Informationen über die Anwendung der Regel und die Korrektheit der Ergebnisse bei Anwendung der generierten Regeln zur Merkmalsextraktion auf die Eingabedaten zurückgegeben und verwendet wird, zum Verfeinern der Prompts (211) zum Generieren von Regeln zur Extraktion von Merkmalen oder direkten Klassifizierung (214).

6. Computerimplementiertes Verfahren gemäß einem der vorherigen Patentansprüche,
**dadurch gekennzeichnet, dass**
das Globalen Large Language Model (LLM, 210) zum direkten Generieren von Programm-Code für Klassifizierungsregeln und zur Merkmalextraktion verwendet wird, und der Programm-Code formalisiert wird, so dass er eine Schnittstelle aufweist zur Integration in das modular anwendungsspezifische ML-System.

7. Computerimplementiertes Verfahren gemäß einem der vorherigen Patentansprüche,
**dadurch gekennzeichnet, dass**
die Klassifizierungsaufgabe eine Zustandsüberwachung (901) zumindest eines Geräts (900) in der Industriellen Anlage (400) umfasst, anhand von entnommenen Meßwerten zu dem Gerät.

8. Computerimplementiertes Verfahren gemäß einem der vorherigen Patentansprüche,
**dadurch gekennzeichnet, dass**
es eine domainspezifische Prompt-Bibliothek gibt (211), umfassend eine Menge von Prompts zur Auswahl anhand einer Anwendungsbeschreibung.

9. Computerimplementiertes Verfahren gemäß einem der vorherigen Patentansprüche,
**dadurch gekennzeichnet, dass**
dem Globalen Large Language Model (LLM, 210) während der Abfrage (202) Zusatzdokumente bereitgestellt werden, welche nicht im Training (104) vorhanden waren, um das domänspezifische Wissen (103) zu erweitern.

10. Computerprogrammprodukt, geeignet und eingerichtet zur Ausführung der Schritte eines Verfahrens gemäß einem der Patentansprüche 1 bis 9.

11. Vorrichtung zur Verwendung von Wissen aus einem trainierten Globalen Large Language Model (LLM, 210) für eine Zieldomäne in der Industriellen Anwendung auf Basis von Industriellen Prozessen und daraus entnommenen Meßwerten zur Lösung von Prädiktionsaufgaben mit einem kleinen anwendungsspezifischen ML System (303) zum Einsatz (902) in der Zieldomäne (400), das erzeugt wird durch
ein ML-Modell (204), zur Integration von extrahierten Regeln
durch Anwendung von anwendungsdomänenspezifischen Prompts (201, 212) auf das Globale Large Language Model (LLM, 210), Extrahiertem zieldomänenspezifischem Wissen (202) in Form von Regeln zur Merkmalsextraktion (203) aus Eingabedaten für ein anwendungsspezifisches ML- Modell (303)
- Training (302) desr zieldomänenspezifischem template Modelarchitektur (205) auf anwendungsspezifschen Daten.

12. Vorrichtung gemäß Patentanspruch 11,
**dadurch gekennzeichnet, dass**
zusätzlich zu den extrahierten Regeln zur Merkmalsextration (203) generierte Klassifizierungsregeln für Eingabedaten für das anwendungsspezifisches ML- System (213, 214) durch das Globale Large Language Model (LLM, 210), zur Durchführung einer Klassifizierungsaufgabe in der domänenspezifischen industriellen Anwendung enthalten sind.

13. Vorrichtung gemäß Patentanspruch 12,
**dadurch gekennzeichnet, dass**
die Klassifizierungsregeln (213, 214) in das zieldomänenspezifischem template Modelarchitektur (205) integriert und in eine Zielmodell (303 300) trainiert sind.

14. Vorrichtung gemäß Patentanspruch 13,
**dadurch gekennzeichnet, dass**
das Integrieren von Klassifizierungsregeln (213, 214) in das anwendungsspezifische M L-System (303) mithilfe eines Leitmodells (312) erfolgt ist,
wobei das Leitmodell eine Zuweisung von Eingabedaten zu dem ML-basierten Klassifizierungsmodell oder einer Klassifizierungsregel durchführt.

15. Vorrichtung gemäß Patentanspruch 14,
**dadurch gekennzeichnet, dass**
eine Verbesserung der Prompts (211) zum Generieren von Regeln zur Extraktion von Merkmalen oder direkten Klassifizierung (214) durch Rückgabe von Informationen über die Anwendung der Regel und die Korrektheit der Ergebnisse bei Anwendung der generierten Regeln zur Merkmalsextraktion mittels eines Feedbacks (200) and das domain-spezifisch trainierten ML-System (303) auf die Eingabedaten.

16. Vorrichtung gemäß einem der vorherigen Patentansprüche 11 bis 15,
**dadurch gekennzeichnet, dass**
das Globalen Large Language Model (LLM, 210) zum direkten Generieren von Programm-Code für Klassifizierungsregeln und zur Merkmalextraktion verwendet wird, und der Programm-Code formalisiert wird, so dass er eine Schnittstelle aufweist zur Integration in das modulares anwendungsspezifische ML-System.

17. Vorrichtung gemäß einem der vorherigen Patentansprüche 11 bis 16,
**dadurch gekennzeichnet, dass**
die Klassifizierungsaufgabe eine Zustandsüberwachung (901) zumindest eines Geräts (900) in der Industriellen Anlage (400) umfasst, anhand von entnommenen Meßwerten zu dem Gerät.

18. Vorrichtung gemäß einem der vorherigen Patentansprüche 11 bis 17,
**dadurch gekennzeichnet, dass**
es eine domainspezifische Prompt-Bibliothek gibt (211), umfassend eine Menge von Prompts zur Auswahl anhand einer Anwendungsbeschreibung.

19. Vorrichtung gemäß einem der vorherigen Patentansprüche,
**dadurch gekennzeichnet, dass**
dem Globalen Large Language Model (LLM, 210) während der Abfrage (202) Zusatzdokumente bereitgestellt werden, welche nicht im Training (104) vorhanden waren um das domänspezifische Wissen (103) zu erweitern.
